# EUROPEAN PATENT APPLICATION

(11) **EP 3 651 048 A1**
(43) Date of publication of application: **13.05.2020**
(21) Application number: 18828420.2
(22) Date of filing: 09.05.2018
(51) Int. Cl.: G06F 21/62, G06F 21/44

(54) **SFS ACCESS CONTROL METHOD AND SYSTEM, SFS AND TERMINAL DEVICE**

(30) Priority: 03.07.2017 CN 201710533513
(71) Applicant: ZTE Corporation, Shenzhen, Guangdong 518057 (CN)
(72) Inventor: WEN, Hailong, Shenzhen, Guangdong 518057 (CN)
(74) Representative: Iannone, Carlo Luigi
(86) International application number: PCT/CN2018/086098
(87) International publication number: WO 2019/007145

(57) **Abstract**

Provided are an SFS access control method and system, an SFS and a terminal equipment. The SFS access control method is applied to a terminal equipment, where an SFS and one or more applications run on the terminal equipment, the SFS includes an SFS client module and an SFS service module, and the method includes the following steps : the SFS client module receives an SFS service request message of an application and sends the SFS service request message to the SFS service module; the SFS service module authenticates the application according to a first access credential carried in the SFS service request message; and after the authentication of the application is determined to be successful, the SFS service module performs an SFS service access operation requested by the application and returns a result of the SFS service access operation to the application through the SFS client module.

## Description

### TECHNICAL FIELD

The present disclosure relates to the technical field of communications, for example, relates to a secure file system (SFS) access control method and system, an SFS and a terminal equipment.

### BACKGROUND

An access control of a user or an application to system sensitive resources can be restricted in a Linux system through a user ID (UID) or a group ID (GID). Taking an onboard telematics BOX (T-Box) as an example, the onboard T-Box is required to support a data secure storage function based on a secure file system (SFS). Since the SFS stores important data of users, it is necessary to perform an access restriction for applications, merely some authorized applications are allowed to access the SFS, and each authorized application can merely access and operate its own data. However, an embedded Linux system runs on an application processor (AP) of the onboard T-Box, and all the applications on it belong to root users, that is, all the applications have access rights to the SFS, so that the access control of the user or the application to the system sensitive resources cannot be restricted through the UID or the GID.

In addition, part of intelligent chips support a trust zone, where the trust zone has two running environments, one is a secure running environment, and the other is a common environment. Merely a reliable application can run in the secure running environment, a common application runs in the common environment, and the common application cannot access important data in the secure running environment. Thus, an intelligent terminal can use the trust zone to isolate a secure application (the reliable application) from the common application. However, many non-intelligent chips do not support the trust zone at all, and cannot isolate the secure application from the common application. In addition, although some chips can support the trust zone, functions of the trust zone are very limited, merely basic services such as encryption and decryption, a secure clock and a pseudo-random number generator (PRNG) are supported, development of the secure application is not supported, and therefore the secure application and the common application on the terminal equipment cannot be isolated from each other.

### SUMMARY

An SFS access control method, an SFS access control system, an SFS and a terminal equipment provided in the embodiments of the present application are capable of improving security of an SFS access.

An SFS access control method provided in the embodiments of the present application is applied to a terminal equipment, where an SFS and one or more applications run on the terminal equipment, and the SFS includes an SFS client module and an SFS service module. The method includes steps described below.

The SFS client module receives an SFS service request message of an application, and sends the SFS service request message to the SFS service module.

The SFS service module authenticates the application according to a first access credential carried in the SFS service request message; and after the authentication of the application is determined to be successful, an SFS service access operation requested by the application is performed, and a result of the SFS service access operation is returned to the application through the SFS client module.

An SFS further provided in the embodiments of the present application includes an SFS client module and an SFS service module.

The SFS client module is configured to receive an SFS service request message of an application, and send the SFS service request message to the SFS service module.

The SFS service module is configured to authenticate the application according to a first access credential carried in the SFS service request message; and after the authentication of the application is determined to be successful, perform an SFS service access operation requested by the application, and return a result of the SFS service access operation to the application through the SFS client module.

An SFS access control system further provided in the embodiments of the present application includes one or more applications running on a terminal equipment and any one of the SFSs described above.

A terminal equipment further provided in the embodiments of the present application includes a memory, a processor, and an SFS access control program stored in the memory and runnable on the processor, where when the SFS access control program is executed, the processor implements any one of the SFS access control methods described above.

A machine-readable medium further provided in the embodiments of the present application is configured to store an SFS access control program for implementing any one of the SFS access control methods described above when the SFS access control program is executed by a processor. In the embodiments of the present application, an SFS on the terminal equipment authenticates the one or more applications running on a terminal equipment through an SFS client module and an SFS service module to identify an application having an access right to the SFS, so as to prevent a malicious application from being disguised into a common application to deceive the SFS, thereby the security of the SFS access is improved.

In an exemplary solution, the SFS authenticates the application by using a second access credential of the application, and the second access credential of the application includes at least a random password. The random password of each application will be changed every time each application is started, and thereby, it is ensured that a hacker or a malicious program cannot guess out the random password or use a violent cracking mode for cracking.

In the exemplarily solution, permitted access paths of each application are set in an application whitelist of the SFS, so that each application can merely access its own data and cannot access data of other applications.

### BRIEF DESCRIPTION OF DRAWINGS

FIG. 1 is a flowchart of an SFS access control method according to an embodiment of the present application;
FIG. 2 is a schematic diagram of an SFS according to an embodiment of the present application;
FIG. 3 is a schematic diagram of an SFS according to another embodiment of the present application;
FIG. 4 is a schematic diagram of an SFS access control system according to an embodiment of the present application;
FIG. 5 is a flowchart of an SFS access control method according to another embodiment of the present application;
FIG. 6 is a flowchart of an SFS access control method according to another embodiment of the present application;
FIG. 7 is a flowchart of an SFS service module allocating an access credential to an application according to an embodiment of the present application;
FIG. 8 is a flowchart of an SFS service module authenticating an application according to an embodiment of the present application; and
FIG. 9 is a flowchart of certificating an SFS authentication unit and an SFS operation unit according to an embodiment of the present application.

### DETAILED DESCRIPTION

The embodiments of the present application will be described in conjunction with the drawings, and it should be understood that the embodiments described hereinafter are intended to describe and explain the present application and not to limit the present application.

The steps illustrated in the flowcharts of the drawings may be performed by a computer system such as a group of computers capable of executing instructions. Further, although logical sequences are shown in the flowcharts, the shown or described steps may be performed in sequences different from those described herein in some cases.

A secure file system (SFS) may provide an encrypted secure storage service for application data. The SFS has the following security features: the SFS encrypts application data by using a hardware key and an advanced encryption standard (AES) encryption algorithm, and a hardware key of each equipment is unique; the hardware key of the equipment is stored in a chip, merely a hardware encryption engine or a trust zone can access the hardware key, and neither an upper application nor an external interface can access the hardware key; and the SFS and a normal file system have similar application programming interfaces (APIs), such as sfs_open(), sfs_close(), sfs_read(), sfs_write() and sfs_rm(), the application merely needs to call the API to perform one or more operations of file opening, file closing, file reading, file writing and the like, and data encryption and decryption are completed by an internal encryption engine of a file system.

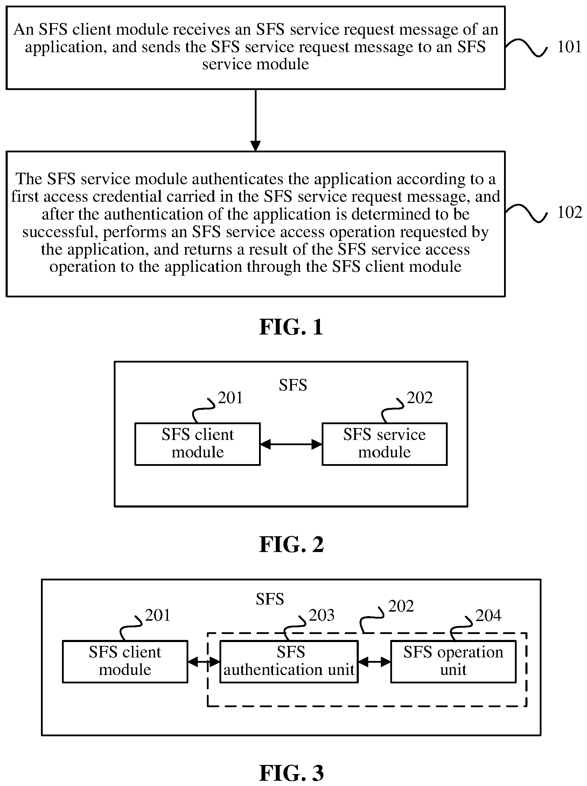

FIG. 1 is a flowchart of an SFS access control method according to an embodiment of the present application. The embodiment is applied to a terminal equipment, where an SFS and one or more applications run on the terminal equipment, and the SFS includes an SFS client module and an SFS service module.

As shown in FIG. 1, the method provided in the embodiment includes steps described below. In step 101, the SFS client module receives an SFS service request message of an application, and sends the SFS service request message to the SFS service module.

In step 102, the SFS service module authenticates the application according to a first access credential carried in the SFS service request message; and after the authentication of the application is determined to be successful, performs an SFS service access operation requested by the application, and returns a result of the SFS service access operation to the application through the SFS client module.

In an exemplary embodiment, the SFS service module may include an SFS authentication unit and an SFS operation unit. In the exemplary embodiment, the step 102 may include the following steps.

The SFS authentication unit authenticates the application according to the first access credential carried in the SFS service request message; and after the authentication of the application is determined to be successful, the SFS authentication unit notifies the SFS operation unit to perform the SFS service access operation requested by the application.

The SFS operation unit performs, according to the notification of the SFS authentication unit, the SFS service access operation requested by the application, and returns the result of the SFS service access operation to the SFS authentication unit.

The SFS authentication unit returns the result of the SFS service access operation to the application through the SFS client module.

The SFS access control method provided in the embodiment separates the SFS into the SFS client module and the SFS service module (similar to a Client/Server architecture) or into the SFS client module, the SFS authentication unit and the SFS operation unit, and the applications are authenticated to distinguish access rights of different applications to the SFS, and thereby the security of the SFS access is improved.

In an exemplary embodiment, in step 102, the step in which the application is authenticated according to the first access credential carried in the SFS service request message may include the following step.

The first access credential carried in the SFS service request message of the application is compared with a second access credential allocated by the SFS service module to the application when the application is started, and if the first access credential is consistent with the second access credential, it is determined that the authentication of the application is successful, and if the first access credential is inconsistent with the second access credential, it is determined that the authentication of the application is unsuccessful.

In an exemplary embodiment, the second access credential may include merely a random password, or may include an application identifier and the random password. Thus, the authentication of the application is performed through the random password, and the access restriction is not performed through a UID or a GID, so that the access rights to the SFS for different applications at the root user level can be restricted.

In an exemplary embodiment, the SFS service module may further store an application whitelist. The method provided in the embodiment may further include that when the application is started, the SFS service module allocates the second access credential to the application according to an application whitelist stored by the SFS service module.

In an exemplary embodiment, the application whitelist may include at least an application name or identifier, a starting path of the application and first fingerprint information about the application.

The step in which when the application is started, the SFS service module allocates the second access credential to the application according to the application whitelist may include the steps described below.

The application whitelist is searched for the starting path of the application and the first fingerprint information about the application according to the application name or identifier of the application.

The application is found according to the starting path of the application, and after the application is found according to the starting path of the application, second fingerprint information about the application is calculated.

The first fingerprint information about the application in the application whitelist is compared with the calculated second fingerprint information about the application, and if the first fingerprint information is consistent with the second fingerprint information, the random password for the application is generated, the random password is transmitted to the application, and the application is started.

In an exemplary embodiment, the method provided in the embodiment further includes if the first fingerprint information is inconsistent with the second fingerprint information, allocation of the random password to the application is rejected.

In an exemplary implementation embodiment, the application whitelist may further include access paths of the application.

In an exemplary embodiment, after the first access credential carried in the SFS service request message being consistent with the second access credential allocated by the SFS service module to the application when the application is started is obtained through comparison, the method provided in the embodiment may further include the SFS service module controls an SFS service access operation requested by the application according to the comparison result of the access path carried in the SFS service request message of the application and the permitted access paths of the application included in the application whitelist.

In an exemplary embodiment, the step in which the SFS service module controls the SFS service access operation requested by the application according to the comparison result of the access path carried in the SFS service request message of the application and the permitted access paths of the application included in the application whitelist may include the steps described below.

If the access path carried in the SFS service request message is included in the permitted access paths of the application included in the application whitelist, it is determined that the authentication of the application is successful, and the SFS service access operation requested by the application is performed according to the access path carried in the SFS service request message.

If the access path carried in the SFS service request message is not included in the permitted access paths of the application included in the application whitelist, it is determined that the authentication of the application is unsuccessful.

In an exemplary embodiment, the step in which if the first access credential is consistent with the second access credential, it is determined that the authentication of the application is successful includes the following step: if the first access credential carried in the SFS service request message of the application is consistent with the second access credential allocated by the SFS service module to the application when the application is started, the access path carried in the SFS service request message of the application is compared with the permitted access paths of the application included in the application whitelist, and if the access path carried in the SFS service request message is included in the permitted access paths of the application included in the application whitelist, it is determined that the authentication of the application is successful.

In an exemplary embodiment, the step in which after the authentication of the application is determined to be successful, the SFS service access operation requested by the application is performed includes the steps described below.

After the authentication of the application is determined to be successful, the SFS service access operation requested by the application is performed according to the access path carried in the SFS service request message.

In an exemplary embodiment, the method provided in the embodiment further includes: if the access path carried in the SFS service request message is not included in the permitted access paths of the application included in the application whitelist, it is determined that the authentication of the application is unsuccessful.

In an exemplary embodiment, the application whitelist may include an application name or an application identifier, a starting path of the application, the first fingerprint information about the application, the permitted access paths of the application and a fingerprint algorithm. In an exemplary embodiment, in order to prevent the application whitelist from being tampered with or forged, a digital signature technology is used for verifying authenticity and integrity of the application whitelist, a public key or root public key used for a digital signature may be stored in the SFS in a pre-configuration manner, and merely the SFS is allowed to perform the reading operation, and modification or deletion is not allowed.

In an exemplary embodiment, the method in the embodiment further includes the step described below.

After the SFS service module determines that the authentication of the application is unsuccessful, an access operation reject message is returned to the application through the SFS client module.

In an exemplary embodiment, the terminal equipment described above may include at least one of: an onboard telematics BOX (T-Box), a customer premise equipment (CPE), a mobile WiFi (MiFi), a data card or an Internet of Things (IOT) terminal.

FIG. 2 is a schematic diagram of an SFS according to an embodiment of the present application. As shown in FIG. 2, the SFS provided in the embodiment includes an SFS client module 201 and an SFS service module 202.

The SFS client module 201 is configured to receive an SFS service request message of an application, and send the SFS service request message to the SFS service module 202.

The SFS service module 202 is configured to: authenticate the application according to a first access credential carried in the SFS service request message; and after the authentication of the application is determined to be successful, perform an SFS service access operation requested by the application, and return a result of the SFS service access operation to the application through the SFS client module 201.

In an exemplary embodiment, the SFS service module 202 may further be configured to: after the authentication of the application is determined to be unsuccessful, return an access operation reject message to the application through the SFS client module 201.

In an exemplary embodiment, as shown in FIG. 3, the SFS service module 202 may include an SFS authentication unit 203 and an SFS operation unit 204. In an exemplary embodiment, the SFS authentication unit 203 may be configured to authenticate the application according to the first access credential carried in the SFS service request message; and after the authentication of the application is determined to be successful, notify the SFS operation unit 204 to perform the SFS service access operation requested by the application; the SFS operation unit 204 may be configured to perform the SFS service access operation requested by the application according to the notification of the SFS authentication unit 203, and return the result of the SFS service access operation to the SFS authentication unit 203; the SFS authentication unit 203 may further be configured to return the result of the SFS service access operation to the application through the SFS client module 201.

In an exemplary embodiment, the SFS authentication unit 203 may further be configured to receive a certification password when the SFS authentication unit 203 is started and the SFS operation unit 204 may further be configured to receive the certification password when the SFS operation unit 204 is started; the SFS operation unit 204 may further be configured to certificate the SFS authentication unit 203 according to the certification password, and when the SFS authentication unit 203 passes the certification, agree to process the SFS service access operation information sent by the SFS authentication unit 203.

In an exemplary embodiment, the SFS service module 202 may be configured to authenticate the application according to the first access credential carried in the SFS service request message in a following manner.

The first access credential carried in the SFS service request message of the application is compared with a second access credential allocated by the SFS service module 202 to the application when the application is started, and if the first access credential is consistent with the second access credential, it is determined that the authentication of the application is successful, and if the first access credential is inconsistent with the second access credential, it is determined that the authentication of the application is unsuccessful.

In an exemplary embodiment, the SFS service module 202 may further be configured to store an application whitelist, where the application whitelist may include at least an application name or identifier, a starting path of the application and first fingerprint information about the application, and the SFS service module 202 may further be configured to: when the application is started, allocate a second access credential including at least a random password to the application according to an application whitelist stored by the SFS service module in following manners.

The application whitelist is searched for the starting path of the application and the first fingerprint information about the application according to the application name or identifier of the application.

The application is found according to the starting path of the application, and after the application is found according to the starting path of the application, second fingerprint information about the application is calculated.

The first fingerprint information about the application in the application whitelist is compared with the calculated second fingerprint information about the application, and if the first fingerprint information is consistent with the second fingerprint information, the random password for the application is generated, the random password is transmitted to the application, and the application is started.

In an exemplary embodiment, the SFS service module 202 may further be configured to: if the first fingerprint information is inconsistent with the second fingerprint information, reject to allocate the random password to the application.

In an exemplary embodiment, the application whitelist may further include permitted access paths of the application.

The SFS service module 202 may further be configured to: after the first access credential carried in the SFS service request message being consistent with the second access credential allocated by the SFS service module 202 to the application when the application is started is obtained through comparison, control an SFS service access operation requested by the application according to the comparison result of the access path carried in the SFS service request message of the application and the permitted access paths of the application included in the application whitelist.

In an exemplary embodiment, the SFS service module 202 may further be configured to control the SFS service access operation requested by the application according to the comparison result of the access path carried in the SFS service request message of the application and the permitted access paths of the application included in the application whitelist in the following manners.

If the access path carried in the SFS service request message is included in the permitted access paths of the application included in the application whitelist, it is determined that the authentication of the application is successful, and the SFS service access operation requested by the application is performed according to the access path carried in the SFS service request message.

If the access path carried in the SFS service request message is not included in the permitted access paths of the application included in the application whitelist, it is determined that the authentication of the application is unsuccessful.

In an exemplary embodiment, the SFS service module is configured to compare the first access credential carried in the SFS service request message of the application with the second access credential allocated by the SFS service module to the application when the application is started; if the first access credential is consistent with the second access credential, compare the access path carried in the SFS service request message of the application with permitted access paths of the application included in the application whitelist; if the access path carried in the SFS service request message is included in the permitted access paths of the application included in the application whitelist, determine that the authentication of the application is successful; and after the authentication of the application is determined to be successful, perform, according to the access path carried in the SFS service request message, the SFS service access operation requested by the application.

In an exemplary embodiment, the SFS service module is further configured to: if the access path carried in the SFS service request message is not included in the permitted access paths of the application included in the application whitelist, determine that the authentication of the application is unsuccessful.

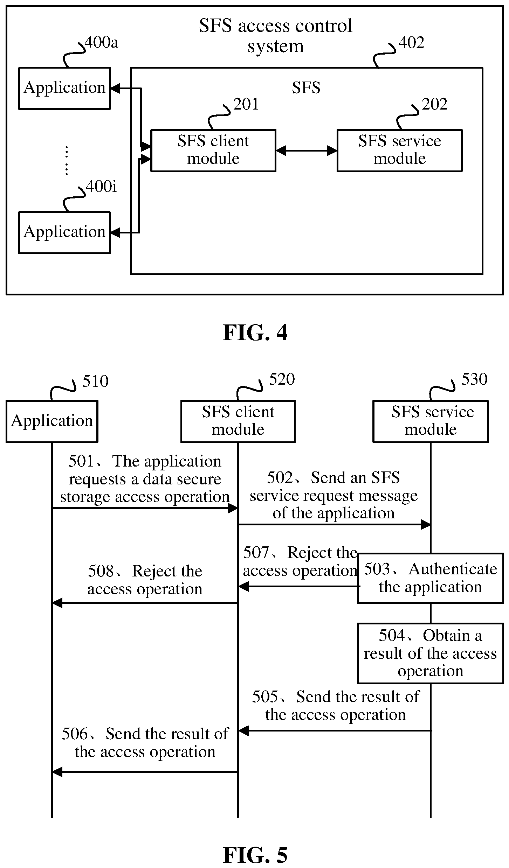

FIG. 4 is a schematic diagram of an SFS access control system according to an embodiment of the present application. As shown in FIG. 4, the SFS access control system provided in the embodiment includes applications (such as an application 400a and an application 400i) running on a terminal and an SFS 402. The SFS 402 may include an SFS client module 201 and an SFS service module 202.

The applications 400a and 400i are application programs running on a terminal equipment, and a data secure storage access operation may be performed by using an access credential allocated by the SFS service module 202 and a service interface of the SFS client module 201. Applications 400a and 400i may be at a root user level.

The SFS client module 201 is a service interface for providing the data secure storage access operation for the applications 400a and 400i. Taking the application 400a as an example, the SFS client module 201 is responsible for sending the SFS service request message called by the application 400a to the SFS service module 202 through a socket or a message queue, and returning the message responded by the SFS service module 202 to the application 400a, where the SFS service request message includes a first access credential for the SFS service module 202 to authenticate the application 400a.

The SFS service module 202 is responsible for receiving the SFS service request message sent by the SFS client module 201, authenticating the application 400a according to the first access credential carried in the SFS service request message and the stored second access credential, and if the authentication is passed, performing the corresponding SFS service access operation, and sending a result of the access operation to the corresponding SFS client module 201 through the socket or the message queue. The SFS service module 202 is further responsible for verifying the validity of the application 400a according to the application whitelist, if the verification is passed, a random password is allocated to the application 400a and the application 400a is started, and if the verification is not passed, the random password is rejected from being allocated to the application 400a and the application 400a is rejected from being started; the SFS service module 202 is further responsible for secure storage of the application whitelist so as to prevent the whitelist from being tampered with or forged.

In an exemplary embodiment, the SFS service module 202 may include an SFS authentication unit and an SFS operation unit. The SFS authentication unit is responsible for authenticating the application 400a, and when the authentication is successful, notifying the SFS operation unit; the SFS operation unit is responsible for providing data secure storage services in accordance with corresponding rights for the application 400a according to the result of the authentication performed by the SFS authentication unit on the application 400a.

For other relevant description of the SFS 402, reference may be made to the description of embodiments corresponding to FIGS. 2 and 3, and thus no further details are provided herein.

### Solutions of the present application are described below.

FIG. 5 is a flowchart of an SFS access control method according to an embodiment of the present application. In the present example, when one application 510 calls the service interface of an SFS client module 520 to request a data secure storage access operation, the SFS client module 520 sends the SFS service request message of the application 510 to an SFS service module 530 through a socket or a message queue; after the SFS service module 530 receives the SFS service request message sent by the SFS client module 520, the application is authenticated according to a first access credential carried in the SFS service request message. If the authentication is passed, the SFS service access operation requested by the application is to be completed, and the result of the access operation is sent to the corresponding SFS client module 520 through the socket or the message queue; and if the authentication is unsuccessful, a result of the access operation unsuccess is sent to the SFS client module 520 through the socket or the message queue. Finally, the SFS client module 520 returns a response message of the SFS service module 530 to the application 510.

### As shown in FIG. 5, the flow of the embodiment includes steps described below.

In step 501, the application 510 calls the service interface of the SFS client module 520 to request the data secure storage access operation, and in an exemplary embodiment, the data secure storage access operation may include one or more operations of SFS file opening, SFS file closing, SFS file deletion, SFS file reading, SFS file writing, and the like.

In step 502, the SFS client module 520 sends the SFS service request message of the application 510 to the SFS service module 530 through the socket or the message queue.

In step 503, the SFS service module 530 authenticates the application according to a second access credential of the application 510 cached locally (that is, the second access credential allocated by the SFS service module 530 to the application 510 when the application 510 is started this time) and the first access credential carried in the SFS service request message of the application 510. If the authentication is successful, step 504 is performed, and if the authentication is unsuccessful, step 507 is performed. In other embodiments, the SFS service module 530 may further authenticate the application 510 according to the second access credential of the application 510 cached locally, the application whitelist and the SFS service request message of the application 510.

In step 504, the SFS service module 530 performs the SFS service access operation requested by the application 510, and obtains the result of the access operation.

In step 505, the SFS service module 530 sends the result of the access operation to the SFS client module 520 through the socket or the message queue.

In step 506, the SFS client module 520 returns the result of the access operation to the application 510.

In step 507, the SFS service module 530 returns rejection of the SFS service request operation of the application 510 to the SFS client module 520.

In step 508, the SFS client module 530 returns the rejection of the SFS service request operation to the application 510.

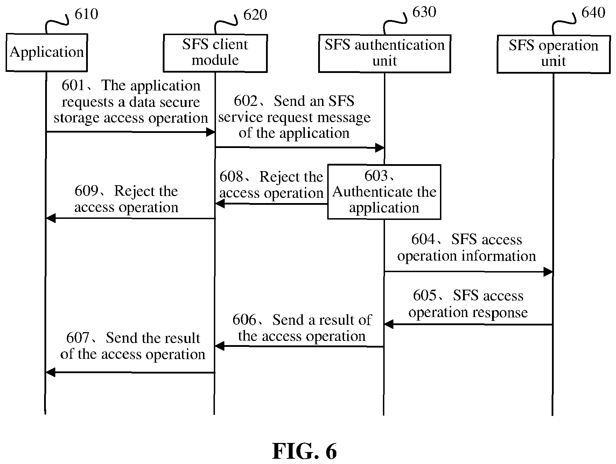

FIG. 6 is a flowchart of an SFS access control method according to an embodiment of the present application. In the present example, when one application 610 calls the service interface of an SFS client module 620 to request a data secure storage access operation, an SFS client module 620 sends the SFS service request message of the application 610 to an SFS authentication unit 630 through a socket or a message queue; after the SFS authentication unit 630 receives the SFS service request message sent by the SFS client module 620, the SFS authentication unit 630 authenticates the application 610 according to a first access credential carried in the SFS service request message and a second access credential of the application 610 stored locally. If the authentication is passed, the SFS authentication unit 630 interacts with an SFS operation unit 640 to complete an SFS service access operation requested by the application 610, and sends the result of the access operation to the corresponding SFS client module 620 through the socket or the message queue; and if the authentication is unsuccessful, the SFS authentication unit 630 sends the result of the access operation unsuccess to the SFS client module 620 through the socket or the message queue. Finally, the SFS client module 620 returns the response message of the SFS authentication unit 630 to the application 610.

### As shown in FIG. 6, the flow of the embodiment includes the steps described below.

In step 601, the application 610 calls the service interface of the SFS client module 620 to request the data secure storage access operation, and in an exemplary embodiment, the data secure storage access operation may include one or more operations of SFS file opening, SFS file closing, SFS file deletion, SFS file reading, an SFS file writing, and the like.

In step 602, the SFS client module 620 sends the SFS service request message of the application 610 to the SFS authentication unit 630 through the socket or the message queue.

In step 603, the SFS authentication unit 630 authenticates the application 610 according to the second access credential (that is, an access credential allocated by the SFS authentication unit 630 to the application 610 when the application 610 is started) of the application 610 cached locally and the first access credential carried in the SFS service request message of the application 610. If the authentication is successful, step 604 is performed, and if the authentication is unsuccessful, step 608 is performed. In other embodiments, the SFS authentication unit 630 may further authenticate the application 610 according to the second access credential of the application 610 cached locally, the application whitelist and the SFS service request message of the application 610.

In step 604, the SFS authentication unit 630 sends the SFS service access operation requested by the application 610 to the SFS operation unit 640.

In step 605, the SFS operation unit 640 performs the SFS service access operation requested by the application 610, and returns the result to the SFS authentication unit 630.

In step 606, the SFS authentication unit 630 sends the result of the SFS service access operation requested by the application 610 to the SFS client module 620 through the socket or the message queue.

In step 607, the SFS client module 620 returns the result of the SFS service access operation requested by the application 610 to the application 610.

In step 608, the SFS authentication unit 630 returns the rejection of the SFS service request operation to the SFS client module 620.

In step 609, the SFS client module 620 returns the rejection of the SFS service request operation to the application 610.

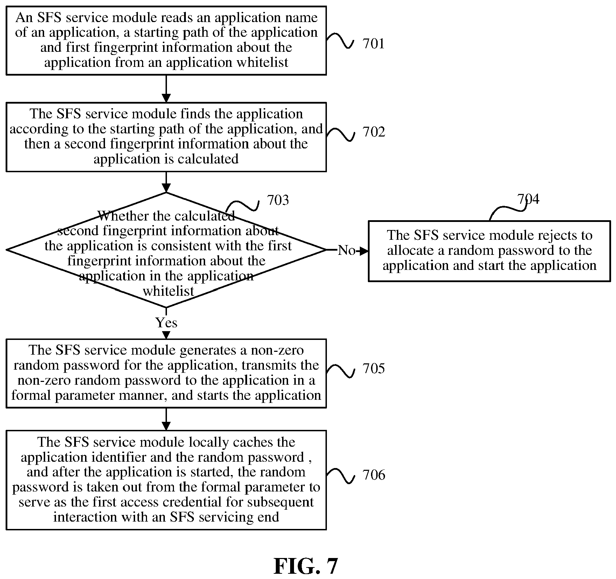

FIG. 7 is a flowchart of an SFS service module allocating an access credential to an application according to an embodiment of the present application. In the present example, the SFS service module searches for a starting path of the application and the first fingerprint information about the application according to the application whitelist, and the SFS service module will find the application according to the starting path of the application and then the second fingerprint information about the application is calculated. In an exemplary embodiment, the second fingerprint information about the application may be calculated by using a message-digest algorithm 5 (MD5) or a secure hash algorithm (SHR); then the SFS service module compares the calculated second fingerprint information about the application with the first fingerprint information about the application in the application whitelist, and if the calculated second fingerprint information about the application is consistent with the first fingerprint information about the application in the application whitelist, a non-zero random password is generated and transmitted to the application in a formal parameter manner, and the application is started, at the same time, the random password and the application identifier are cached locally, and after the application is started, the random password is taken out from the formal parameter to serve as a first access credential for interacting with the SFS service module; and if the calculated second fingerprint information about the application is inconsistent with the first fingerprint information about the application in the application whitelist, the random password is rejected from being allocated to the application and the application is rejected from being started.

### As shown in FIG. 7, the flow of the embodiment includes the steps described below.

In step 701, the SFS service module reads the application name, the starting path of the application and the first fingerprint information about the application from the application whitelist.

In step 702, the SFS service module will find the application according to the starting path of the application, and then the second fingerprint information about the application is calculated. In an exemplary embodiment, the second fingerprint information about the application may be calculated by using the MD5 or the SHR, for example, the starting path of the application is encrypted by using the MD5 or the SHA to obtain the second fingerprint information about the application.

In step 703, the SFS service module compares the calculated second fingerprint information about the application with the first fingerprint information about the application in the application whitelist, and if the calculated second fingerprint information about the application is consistent with the first fingerprint information about the application in the application whitelist, step 705 is performed, and if the calculated second fingerprint information about the application is inconsistent with the first fingerprint information about the application in the application whitelist, step 704 is performed.

In step 704, the SFS service module rejects to allocate the random password to the application and start the application.

In step 705, the SFS service module generates a non-zero random password for the application, transmits the non-zero random password to the application in the formal parameter manner, and starts the application.

In step 706, the SFS service module locally caches the random password and the application identifier (corresponding to the second access credential described above), and after the application is started, the random password is taken out from the formal parameter to serve as the first access credential for subsequent interaction with the SFS service module. In other exemplary embodiments, the application may also use the random password and the application identifier as the first access credential.

In an exemplary embodiment, the application whitelist may include the application name or application identifier, the starting path of the application, the first fingerprint information about the application, the permitted access paths of the application and a fingerprint algorithm. Table 1 illustrates examples of application whitelists according to the embodiment. Table 1 illustrates merely three applications, that is, App1, App2 and App3, where the App1 is located under a System\bin directory, and the App2 and the App3 each are located under a System\sbin directory. The App1 uses a SHA256 fingerprint algorithm, a calculated fingerprint is a 256-bit hexadecimal string, the App2 and the App3 use the MD5 fingerprint algorithm, and the calculated fingerprint is a 128-bit hexadecimal string. The App1 can merely perform the file secure storage access operation under a ZTEFILE\sfs\app1 directory, the App2 can merely perform the file secure storage access operation under a ZTEFILE\sfs\app2 directory, and the App3 can merely perform the file secure storage access operation under a ZTEFILE\sfs\app3 directory. In order to prevent the application whitelist from being tampered with or forged, a digital signature technology is used for verifying authenticity and integrity of the application whitelist, where a public key or a root public key used for a digital signature is stored in the SFS such as being stored in a ZTEFILE\sfs\pubkey directory, in a pre-configuration manner, and after a configuration file is pre-configured, the SFS service module is allowed to merely perform the reading operation, and the SFS service module is not allowed to perform modification or deletion.

**Table 1**

| Application name | Starting path | First fingerprint information | Fingerprint algorithm | Permitted access paths of the application |
|---|---|---|---|---|
| App1 | System\bin | 4392712ba01368ef | SHA256 | ZTEFILE\sfs\app1\ |
| | | df14b05c76f9e4df0 | | |
| | | d53664630b5d486 | | |
| | | 32ed17a137f39076 | | |
| App2 | System\sbin | 7aefa4506f7af497 | MD5 | ZTEFILE\sfs\app2\ |
| | | ac491a27f862cf80 | | |
| App3 | System\sbin | 5cc52759af76a092 | MD5 | ZTEFILE\sfs\app3\ |
| | | e0c21829cd0ef693 | | |

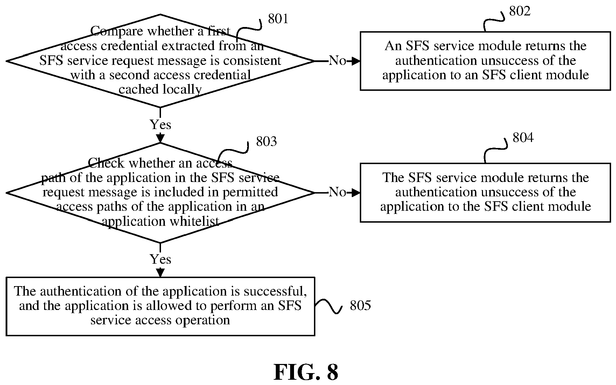

FIG. 8 is a flowchart of an SFS service module authenticating an application according to an embodiment of the present application. In the present example, the authentication of the application by the SFS service module may include two processes of access credential certification and path access control. The process of the access credential certification includes the following steps: the SFS service module extracts the first access credential from the SFS service request message sent by the SFS client module and then compares the first access credential with the second access credential cached locally, if the first access credential is consistent with the second access credential cached locally, the certification is passed, and if the first access credential is inconsistent with the second access credential cached locally, the certification is unsuccessful, and a result of the authentication unsuccess of the application is returned. The process of the path access control includes the following steps: after the access credential certification is passed, the SFS service module will check the permitted access paths of the application included in the application whitelist; if the access path carried in the SFS service request message of the application is included in the permitted access paths of the application included in the application whitelist, the authentication success of the application is returned, and the application is allowed to perform the SFS file access operation; and if the access path carried in the SFS service request message of the application is not included in the permitted access paths of the application included in the application whitelist, the authentication unsuccess of the application is returned.

### As shown in FIG. 8, the flow of the embodiment includes the steps described below.

In step 801, the SFS service module extracts the first access credential of the application from the SFS service request message sent by the SFS client module and then compares the first access credential with the second access credential of the application cached locally, if the first access credential of the application is inconsistent with the second access credential of the application cached locally, step 802 is performed, and if the first access credential of the application is consistent with the second access credential of the application cached locally, step 803 is performed.

In step 802, the SFS service module 520 returns the authentication unsuccess of the application to the SFS client module.

In step 803, the SFS service module will check whether the access path of the application in the SFS service request message is included in the permitted access paths of the application in the application whitelist; if the access path of the application in the SFS service request message is not included in the permitted access paths of the application in the application whitelist, step 804 is performed, and if the access path of the application in the SFS service request message is included in the permitted access paths of the application in the application whitelist, step 805 is performed.

In step 804, the SFS service module 520 returns the authentication unsuccess of the application to the SFS client module.

In step 805, the authentication of the application is successful, and the SFS service module allows the application to perform the SFS service access operation, for example, the SFS service module performs the SFS service access operation requested by the application, or the SFS authentication unit may notify the SFS operation unit to perform the SFS service access operation requested by the application.

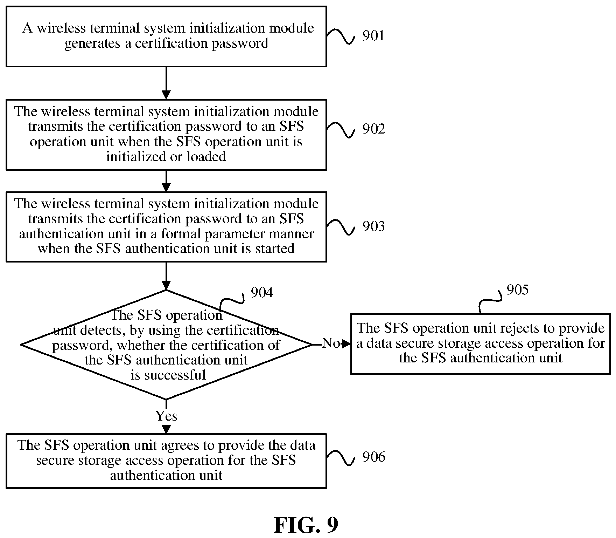

FIG. 9 is a flowchart of certificating an SFS authentication unit and an SFS operation unit according to an embodiment of the present application. In the present example, certification may also be performed between the SFS authentication unit and the SFS operation unit, and a certification password is allocated by a system, where the system transmits the certification password to the SFS authentication unit in the formal parameter manner when the SFS authentication unit is started, and the system transmits the certification password to the SFS operation unit when the SFS operation unit is initialized or loaded.

### As shown in FIG. 9, the flow of the embodiment includes the steps described below.

In step 901, a wireless terminal system initialization (linux init) module generates the certification password.

In step 902, the wireless terminal system initialization (Linux init) module transmits the certification password to the SFS operation unit when the SFS operation unit is initialized or loaded.

In step 903, the wireless terminal system initialization (Linux init) module transmits the certification password to the SFS authentication unit in the formal parameter manner when the SFS authentication unit is started.

In step 904, the SFS operation unit certificates the SFS authentication unit by using the certification password; if the certification is passed, step 906 is performed, and if the certification is unsuccessful, step 905 is performed.

In step 905, the SFS operation unit rejects to provide the data secure storage access operation for the SFS authentication unit.

In step 906, the SFS operation unit agrees to provide the data secure storage access operation for the SFS authentication unit.

In the present example, the certification is performed between the SFS authentication unit and the SFS operation unit, so that the security of the solution of the present application can be further improved.

### The present application will be described below by way of two application scenarios.

### Application scenario one

The onboard T-Box supports a remote vehicle control function, a bidirectional authentication needs to be performed between the onboard T-Box and a background of a vehicle factory telematics service provider (TSP), so as to ensure both parties can be trusted. A certificate and account information which are related to authentication of the T-Box and the TSP need to be safely stored; if these information is stolen or modified by the hacker or malicious programs, the vehicle may be remotely controlled by a person or a TSP server will be at a risk of intrusion.

A TSP client program on the T-Box is responsible for communicating with the background of a vehicle factory TSP, and the certificate and the account information which are used for authentication with a server need to be stored in the SFS of the T-Box to ensure security. Due to the fact that the T-Box supports secondary development, the vehicle factory allows a third party to develop an automobile application running on the T-Box; if the solution of the present application is not used, other applications on the T-Box can also access important data used for authentication and stored in the SFS by a TSP Client program. Once these information is stolen or modified by the hacker or the malicious programs, the vehicle may be remotely controlled by the person or the TSP server will be at the risk of intrusion.

After the solution of the present application is used, the SFS service module will authenticate the automobile application according to the access credential and the application whitelist, merely the application whose authentication is successful can access data in the SFS and can access merely data stored by the application itself, and cannot access data stored by other applications. Therefore, the hacker and the malicious application cannot access important data stored in the SFS by the TSP client program.

### Application scenario two

The solution of the present application is applicable to any hardware environment supporting the SFS function, and the hardware environment may include, but is not limited to, a Qualcomm mobile data modem (MDM) chip platform, a MediaTek (MTK) chip platform, a Marvell chip platform, a Spreadtrum chip platform and the like; and product types include, but are not limited to, a customer premise equipment (CPE), mobile wifi (MiFi), a data card, the third generation (3G) communication module, the fourth generation (4G) communication module, an Internet of Things terminal, or the like.

The CPE, the MiFi, the data card, the 3G communication module, the 4G communication module, the IOT terminal or the like need to securely store sensitive data (such as WiFi and Web UI passwords) of the equipment by using the SFS, a specific application is allowed to perform the access control operation on these sensitive data and some network applications are not allowed to perform the access control operation on the sensitive data within the SFS. In this way, even if these network applications are breached due to security vulnerabilities, the equipment security is not affected.

In conclusion, in the present application, the SFS is decomposed into the SFS client module and the SFS service module, or decomposed into the SFS client module, the SFS authentication unit and the SFS operation unit. The SFS client module is an interface presented to an application accessing an SFS service, and the SFS service module is responsible for fingerprint certification of, access credential allocation to, and starting of an application. When the application calls the SFS service module to request the SFS service, the SFS service module may authenticate the access credential and the access path which are carried in the SFS service request message according to the application whitelist and the access credential allocated by the SFS service module to the application when the application is started. If the authentication is successful, the application is allowed to perform the data storage access operation, and if the authentication is unsuccessful, the request for the data storage access operation from the application is rejected. The authentication is performed through the random password in the access credential, and the random password of each application is changed each time the each application is started, so that the hacker or the malicious programs cannot guess out the password or use a violent cracking mode for cracking to prevent the malicious application from being disguised into the normal application to deceive the SFS service module. The access paths of each application is set in the application whitelist, so that the each application is controlled to be able to merely access its own data and not be able to access data of other applications.

In addition, a terminal equipment further provided in the embodiments of the present application includes a memory, a processor, and an SFS access control program stored in the memory and runnable on the processor, where when the SFS access control program is executed, the processor implements any one of the SFS access control methods described above.

In addition, a machine-readable medium further provided in the embodiments of the present application is configured to store an SFS access control program for implementing any one of the SFS access control methods described above when the SFS access control program is executed by a processor.

It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be implemented jointly by several physical components. Some or all components may be implemented as software executed by processors such as digital signal processors or microcontrollers, hardware, or integrated circuits such as application specific integrated circuits. Such software may be distributed on a machine-readable medium (such as a computer-readable medium). The computer-readable medium may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage apparatuses, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

Although the embodiments disclosed by the present application are as described above, the content thereof is merely embodiments for facilitating the understanding of the present application and is not intended to limit the present application. Any person skilled in the art to which the present application pertains may make any modifications and variations in the implementation forms and details without departing from the spirit and scope disclosed by the present application, but the patent protection scope of the present application is still subject to the scope defined by the appended claims.

### INDUSTRIAL APPLICABILITY

An SFS access control method and system, an SFS and a terminal equipment are provided in the embodiments of the present disclosure. The SFS client module and the SFS service module authenticate one or more applications running on the terminal equipment to identify an application having an access right to the SFS, so as to prevent a malicious application from being disguised into a normal application to deceive the SFS, and thereby the security of the SFS access is improved.

## Claims

1. A secure file system (SFS) access control method, applied to a terminal equipment, wherein an SFS and at least one application run on the terminal equipment, and the SFS comprises an SFS client module and an SFS service module; wherein the method comprises:
receiving, by the SFS client module, an SFS service request message of one of the at least one application, and sending the SFS service request message to the SFS service module; and
authenticating, by the SFS service module, the one of the at least one application according to a first access credential carried in the SFS service request message; and after the authentication of the one of the at least one application is determined to be successful, performing an SFS service access operation requested by the one of the at least one application, and returning a result of the SFS service access operation to the one of the at least one application through the SFS client module.

2. The method of claim 1, wherein authenticating, by the SFS service module, the one of the at least one application according to the first access credential carried in the SFS service request message comprises:
comparing, by the SFS service module, the first access credential carried in the SFS service request message of the one of the at least one application with a second access credential allocated by the SFS service module to the one of the at least one application when the one of the at least one application is started, and
in a case where the first access credential is consistent with the second access credential, determining that the authentication of the one of the at least one application is successful, and in a case where the first access credential is inconsistent with the second access credential, determining that the authentication of the one of the at least one application is unsuccessful.

3. The method of claim 2, further comprising:
allocating, by the SFS service module in a case where the one of the at least one application is started, the second access credential to the one of the at least one application according to an application whitelist stored by the SFS service module.

4. The method of claim 3, wherein
the application whitelist at least comprises an application name or identifier, a starting path of the one of the at least one application and first fingerprint information about the one of the at least one application; and the second access credential at least comprises a random password; and
allocating, by the SFS service module when the one of the at least one application is started, the second access credential to the one of the at least one application according to the application whitelist stored by the SFS service module comprises:
searching the application whitelist for the starting path of the one of the at least one application and the first fingerprint information about the one of the at least one application according to the application name or identifier of the one of the at least one application;
finding the one of the at least one application according to the starting path of the one of the at least one application, and after the one of the at least one application is found according to the starting path of the one of the at least one application, calculating second fingerprint information about the one of the at least one application;
comparing the first fingerprint information about the one of the at least one application in the application whitelist with the calculated second fingerprint information about the one of the at least one application, and in a case where the first fingerprint information is consistent with the second fingerprint information, generating the random password for the one of the at least one application; and
transmitting the random password to the one of the at least one application to start the one of the at least one application.

5. The method of claim 2, 3 or 4, wherein
the application whitelist further comprises permitted access paths of the one of the at least one application; and
in a case where the first access credential is consistent with the second access credential, determining that the authentication of the one of the at least one application is successful comprises:
in a case where the first access credential is consistent with the second access credential, comparing an access path carried in the SFS service request message of the one of the at least one application with the permitted access paths of the one of the at least one application comprised in the application whitelist; and
in a case where the access path carried in the SFS service request message is comprised in the permitted access paths of the one of the at least one application comprised in the application whitelist, determining that the authentication of the one of the at least one application is successful.

6. The method of claim 5, wherein after the authentication of the one of the at least one application is determined to be successful, performing the SFS service access operation requested by the one of the at least one application comprises:
after the authentication of the one of the at least one application is determined to be successful, performing, according to the access path carried in the SFS service request message, the SFS service access operation requested by the one of the at least one application.

7. The method of claim 6, further comprising:
in a case where the access path carried in the SFS service request message is not comprised in the permitted access paths of the one of the at least one application comprised in the application whitelist, determining that the authentication of the one of the at least one application is unsuccessful.

8. The method of claim 1 or 7, further comprising:
after determining that the authentication of the one of the at least one application is unsuccessful, returning, by the SFS service module, an access operation reject message to the one of the at least one application through the SFS client module.

9. The method of claim 1, wherein the SFS service module comprises an SFS authentication unit and an SFS operation unit;
wherein authenticating, by the SFS service module, the one of the at least one application according to the first access credential carried in the SFS service request message; and after the authentication of the one of the at least one application is determined to be successful, performing the SFS service access operation requested by the one of the at least one application, and returning the result of the SFS service access operation to the one of the at least one application through the SFS client module comprises:
authenticating, by the SFS authentication unit, the one of the at least one application according to the first access credential carried in the SFS service request message; and after the authentication of the one of the at least one application is determined to be successful, notifying the SFS operation unit to perform the SFS service access operation requested by the one of the at least one application;
performing, by the SFS operation unit according to the notification of the SFS authentication unit, the SFS service access operation requested by the one of the at least one application, and returning the result of the SFS service access operation to the SFS authentication unit; and
returning, by the SFS authentication unit, the result of the SFS service access operation to the one of the at least one application through the SFS client module.

10. The method of claim 1, wherein the terminal equipment comprises at least one of: an onboard telematics BOX (T-Box), a customer premise equipment (CPE), a mobile WiFi (MiFi), a data card or an Internet of Things (IOT) terminal.

11. A secure file system (SFS), comprising: an SFS client module and an SFS service module;
wherein the SFS client module is configured to receive an SFS service request message of an application, and send the SFS service request message to the SFS service module; and
wherein the SFS service module is configured to authenticate the application according to a first access credential carried in the SFS service request message; and after the authentication of the application is determined to be successful, perform an SFS service access operation requested by the application, and return a result of the SFS service access operation to the application through the SFS client module.

12. The SFS of claim 11, wherein the SFS service module is configured to authenticate the application according to the first access credential carried in the SFS service request message in a following manner:
comparing the first access credential carried in the SFS service request message of the application with a second access credential allocated by the SFS service module to the application in a case where the application is started, and
in a case where the first access credential is consistent with the second access credential, determining that the authentication of the application is successful, and in a case where the first access credential is inconsistent with the second access credential, determining that the authentication of the application is unsuccessful.

13. The SFS of claim 12, wherein the SFS service module is configured to: in a case where the application is started, allocate a second access credential at least comprising a random password to the application according to an application whitelist stored by the SFS service module in following manners, wherein the application whitelist at least comprises an application name or identifier, a starting path of the application and first fingerprint information about the application;
searching the application whitelist for the starting path of the application and the first fingerprint information about the application according to the application name or identifier of the application;
finding the application according to the starting path of the application, and after the application is found according to the starting path of the application, calculating second fingerprint information about the application; and
comparing the first fingerprint information about the application in the application whitelist with the calculated second fingerprint information about the application, and in a case where the first fingerprint information is consistent with the second fingerprint information, generating the random password for the application, and transmitting the random password to the application to start the application.

14. The SFS of claim 11, 12 or 13, wherein the application whitelist further comprises permitted access paths of the application; and the SFS service module is configured to:
compare the first access credential carried in the SFS service request message of the application with the second access credential allocated by the SFS service module to the application in a case where the application is started;
in a case where the first access credential is consistent with the second access credential, compare an access path carried in the SFS service request message of the application with the permitted access paths of the application comprised in the application whitelist;
in a case where the access path carried in the SFS service request message is comprised in the permitted access paths of the application comprised in the application whitelist, determine that the authentication of the application is successful; and
after the authentication of the application is determined to be successful, perform, according to the access path carried in the SFS service request message, the SFS service access operation requested by the application.

15. The SFS of claim 14, wherein the SFS service module is further configured to:
in a case where the access path carried in the SFS service request message is not comprised in the permitted access paths of the application comprised in the application whitelist, determine that the authentication of the application is unsuccessful.

16. The SFS of claim 11, wherein the SFS service module is further configured to:
after the authentication of the application is determined to be unsuccessful, return an access operation reject message to the application through the SFS client module.

17. The SFS of claim 11, wherein the SFS service module comprises an SFS authentication unit and an SFS operation unit;
wherein the SFS authentication unit is configured to authenticate the application according to the first access credential carried in the SFS service request message; and after the authentication of the application is determined to be successful, notify the SFS operation unit to perform the SFS service access operation requested by the application;
wherein the SFS operation unit is configured to perform, according to the notification of the SFS authentication unit, the SFS service access operation requested by the application, and return the result of the SFS service access operation to the SFS authentication unit; and
wherein the SFS authentication unit is further configured to return the result of the SFS service access operation to the application through the SFS client module.

18. A secure file system (SFS) access control system, comprising: one or more applications running on a terminal equipment and the SFS of any one of claims 11 to 18.

19. A terminal equipment, comprising a memory, a processor, and a secure file system (SFS) access control program stored in the memory and runnable on the processor, wherein, when the SFS access control program is executed, the processor implements the SFS access control method of any one of claims 1 to 10.

20. A machine-readable medium, which is configured to store a secure file system (SFS) access control program for implementing the SFS access control method of any one of claims 1 to 10 when the SFS access control program is executed by a processor.
